# EUROPEAN PATENT SPECIFICATION

(11) **EP 3 513 883 B1**
(45) Date of publication and mention of the grant of the patent: **03.01.2024**
(21) Application number: 18382028.1
(22) Date of filing: 19.01.2018
(51) Int. Cl.: B08B 7/02, F01D 25/00, F23R 3/44, F23J 3/02

(54) **CLEANING DEVICE FOR JET ENGINES AND CLEANING METHOD**
REINIGUNGSVORRICHTUNG FÜR DÜSENTRIEBWERKE UND REINIGUNGSVERFAHREN
DISPOSITIF DE NETTOYAGE POUR MOTEURS À RÉACTION ET PROCÉDÉ DE NETTOYAGE

(43) Date of publication of application: 24.07.2019
(73) Proprietor: Airbus Operations, S.L.U., 28906 Getafe (Madrid) (ES)
(72) Inventor: CHIABRANDO, Marcos, Javier, 28906 GETAFE (Madrid) (ES); RAMOS PAUL LASTRA, Pedro, Felipe, 28906 GETAFE (Madrid) (ES)
(74) Representative: Herrero & Asociados, S.L.

(56) References cited:
- DE-A1- 4 341 996
- US-A- 3 399 441
- US-A- 4 134 193
- US-A- 5 010 632
- US-A1- 2010 275 404
- US-A1- 2014 209 124

## Description

### Technical field of the invention

The present invention refers to a cleaning method for jet engines, having application in the technical field of jet engines, and more specifically in the aeronautical industry of aeronautics.

### Background of the invention

During the pushback operation of some large passenger aircrafts, it has been noticed some events involving autoshutdowns of the Auxiliary Power Unit (APU).

Once an investigation has been carried out, the conclusion has been that the root cause of such events is the deterioration of the APU core compressor surge margin due to the blockage of the combustion chamber liner caused by the obstruction of the effusion holes.

In turn, this obstruction or blockage is caused by the sand ingestion thought the normal APU intake, and it's solidification on the outer surface of the combustion chamber liner due to the pressure and the extremely hot temperatures. The sand accumulation causes an increased pressure over the combustor that dramatically reduces the core compressor surge margin, provoking several compressor stalls and the later engine autoshutdown.

Therefore, it comes clear the necessity of eliminating the sand obstruction of the effusion holes in the combustion chamber liner.

There exist cleaning devices involving vibratory means but not intended for the above stated purpose.

For instance, US-4134193-A discloses a surface-cleaning tool comprising a cluster of pins, serving to clean the surface of a workpiece, slidably mounted in bores of a guide plate which is spring-urged against a metallic anvil, with formation of a clearance between the plate and the anvil in which the heads of the pins can move. The anvil is periodically struck by a ram which is freely reciprocable in a tool housing surrounding the anvil and the guide plate, the housing being provided with a pistol grip carrying a trigger that controls admission of compressed air to a chamber at the rear of the housing.

US-5010632-A discloses a descaling tool for use with a reciprocating hammer for removing foreign substances from metal, wood, stone, or the like. The tool is comprised of an elongated shank, one end having an adapter for receipt into a reciprocating hammer, the other having a bore therein for receiving a bundle of elongated, resilient descaling members. The shank is encased by a sleeve and handle assembly which is used to adjust the exposed portion of the descaling members.

US-3399441-A discloses an electrically driven chisel device wherein rotary motion is converted to linear motion to reciprocate a tool carrying member. The tools mounted in the tool carrying member are axially slidable thereto wherein inertia forces are employed to produce the tool impact and substantially recoilless operation is produced.

In order to face this problem, in the field of jet engines, there are further known several solutions involving vibratory cleaning of the combustion chamber.

DE-4341996-A1 discloses a method of preventing formation of deposits on interior of gas turbine. During operation, the inner surfaces affected by deposits of a gas turbine including a turbine part and an upstream compressor part, the "fouling" is prevented without disturbing the operating procedure by subjecting the inside of the gas turbine to sound waves from sound transmitters arranged on the gas turbine.

However, all of those solutions require the removal of the parts to be cleaned, which takes a lot of time and means to realize the cleaning tasks. Furthermore, most of those solutions require the immersion of the part to be cleaned in water based liquid medium in order to use a sort of vibration transmitter, which is commonly known as ultrasonic cleaner. Therefore, considering the operation and the installation required, the cleaning operations are susceptible to be improved, leading to the shortening of the times required, the means needed and the costs involved.

### Description of the invention

The present invention relates to a cleaning method for jet engines, which as defined by claim 1. The invention overcomes the above mentioned drawbacks.

The cleaning method comprises the use of device that comprises a vibration generator unit, capable of generating a vibration. The vibration generator unit is fixed to a main body that receives said vibration movement.

The main body of the device is operatively connectable, that is to say attachable, with a first end of a vibration transmitter element having an elongated configuration. The vibration transmitter element has likewise a second end, opposite to the first end, wherein said second end is configured, when in use, to contact a inner side of the combustor of the jet engine. Furthermore, the vibration transmitter element is able to be introduced across any of an engine injector hole, a combustor injector hole of the jet engine and even through the igniters holes, borescope ports, or the like.

The main body is a structural frame supporting the different parts and elements of the cleaning device, which are fixed to the main body.

The vibration transmitter element is an easily interchangeable element, thereby different sizes and geometries are envisaged in order to allow the adaptation to different jet engines. The second end of the vibration transmitter element, when the cleaning device is in use, is in physical contact with the surface that has to be cleaned, normally the inner side of the combustor. Furthermore, the length of the main body can be likewise selected according to the dimensions of the jet engine

The invention proposes a new concept for jet engine combustion chambers cleaning. Despite a preferred embodiment of the invention is specifically designed for auxiliary power units, it could be easily adapted to its usage on any kind of jet engine, for instance propulsive turbo jet engines, turbo prop engines, helicopter engines, and the like.

The main advantage of the invention, with regard the state of the art cleaning methods, is that the invention does not imply the removal of the engine from its location on the aircraft. The cleaning device is particularly useful for those jet engines that usually operate on sand environment.

The invention allows to remove the crystallized sand that usually blocks the cooling effusion holes of the combustion chamber liners, which can be achieved because preferably the part is intentionally vibrated at its natural frequency. This induced vibration will detach the crystallized sand and other solid contaminants that are stuck to the combustor liner or any other part to be cleaned.

It is envisaged that the vibration generator unit comprises a variable speed electrical engine having a shaft attachable to an eccentric unbalanced mass. Thereby, the mass, shape and its turning radius could be adjusted because the eccentric mass is interchangeable. Thereby, the vibration generator unit is able to generate a wide range of frequencies and amplitudes that could be adjusted. This allow to preferably select the natural frequency of the part.

Furthermore, the main body can house a control unit configured to regulate the speed of the variable speed electrical engine, thereby housing the controller of the vibration generator unit.

Likewise, the main body can comprise at least one vibration isolator element configured to reduce or avoid the transmission of vibration to the control unit or any other parts of the device.

It is envisaged that the cleaning device comprises a support element located in the connection between the main body and the vibration transmitter element, wherein the support element has a contact surface having a larger area than that of the engine injector hole, thereby preventing the cleaning device to completely pass through the engine injector hole.

It is contemplated the cleaning method might comprise the use of a vacuum device connected to a different combustor injector hole (as per example but not limited only to this one, it could also be introduced through the igniters holes, borescope ports, etc...), during step C), in order to collect the detached sand. There might be other procedures to collect / remove the sand cleaned from the combustor such as engine dry cranking.

### Brief description of the drawings

For a better comprehension of the invention, the following drawings are provided for illustrative and non-limiting purposes, wherein:
Figure 1 schematically shows an elevation view of an embodiment of the cleaning device.
Figure 2 schematically shows longitudinal section of the combustor of a jet engine with the cleaning device in use, wherein the combustor has been represented by both a continuous and a dotted lines vibrating at its natural frequency.

### Preferred embodiment of the invention

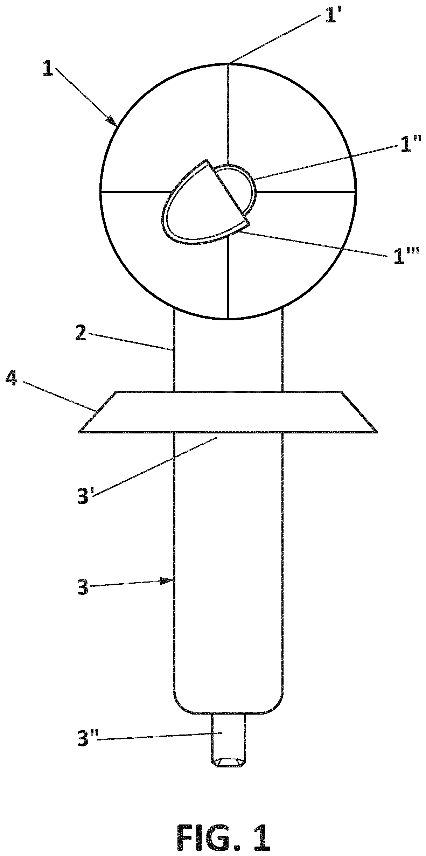

Figure 1 shows a preferred embodiment of the cleaning device. The cleaning device for jet engines comprises a vibration generator unit (1) fixed to a main body (2).

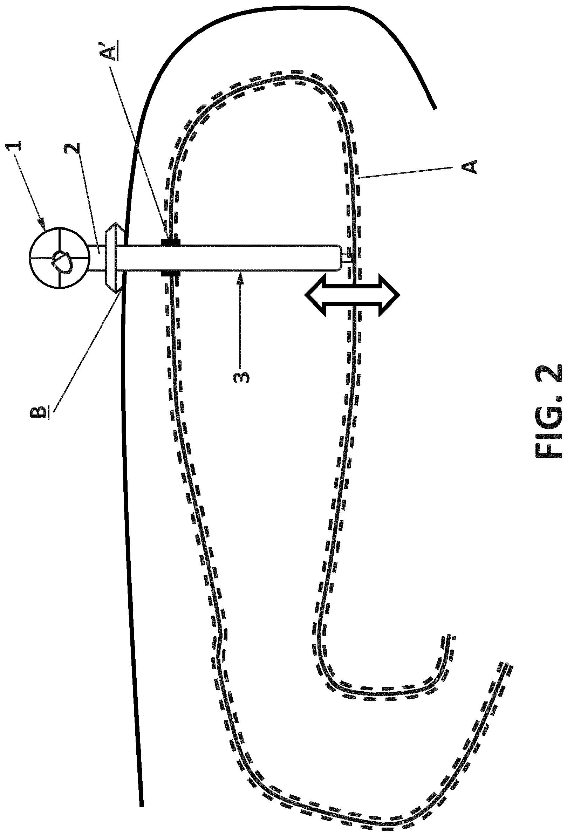

In turn, the main body (2) is operatively connectable with a first end (3') of a vibration transmitter element (3) having an elongated configuration. The vibration transmitter element (3) has likewise a second end (3"), opposite to the first end (3'), configured to contact an inner side of the combustor (A) of the jet engine, as represented in figure 2, where can be appreciated that the vibration transmitter element (3) is able to be introduced across both an engine injector hole (B) and a combustor injector hole (A') of the jet engine.

As shown in the embodiment represented in figure 1, the vibration generator unit (1) comprises a variable speed electrical engine (1') having a shaft (1") attachable to an eccentric unbalanced mass (1‴), which is interchangeable, thus allowing to generate a wide range of frequencies that could be adjusted.

Although not represented in the figures, the main body (2) houses a control unit configured to regulate the speed of the variable speed electrical engine (1'). Besides, the main body (2) comprises a vibration isolator element configured to reduce or avoid the transmission of vibration to the control unit.

As represented in the figures, the cleaning device comprises a support element (4) located in the connection between the main body (2) and the vibration transmitter element (3). The support element (4) has a contact surface having a larger area than that of the engine injector hole (B), thereby preventing the cleaning device to completely pass through the engine injector hole, as shown in figure 2.

## Claims

1. Cleaning method for jet engines, comprising the following steps:
- A) identify the natural frequency of a combustor chamber liner of the jet engine to be cleaned, - C) reproduce the natural frequency of the combustor by means of the cleaning device, and **characterized in that** the method further comprises following step
- B) dispose a cleaning device that comprises a vibration generator unit (1) that is fixed to a main body (2), wherein the main body (2) is operatively connectable with a first end (3') of a vibration transmitter element (3) having an elongated configuration, the vibration transmitter element (3) having likewise a second end (3"), opposite to the first end (3'), the second end (3") being configured to contact an inner side of the combustor (A) of the jet engine, and the vibration transmitter element (3) being able to be introduced across an engine injector hole (B) and a combustor injector hole (A') of the jet engine , wherein step B) comprises disposing said cleaning device with the second end (3") of the vibration transmitter element (3) in contact with the inner side of the combustor (A).

2. Cleaning method according to the preceding claim, wherein step A) comprises identifying the natural frequency of a combustor chamber liner of the jet engine to be cleaned from sand.

3. Cleaning method according to the preceding claim, further comprising the use of a vacuum device connected to a combustor injector hole (A'), during step C), in order to collect the detached sand.

4. Cleaning method according to any of claims 2 and 3, further comprising the use of a vacuum device connected to a combustor injector hole (A'), during step C), in order to produce an engine airflow by the means of a dry crank to detach the cleaned sand to the exhaust.

5. Cleaning method according to according to claim 1 wherein the vibration generator unit (1) comprises a variable speed electrical engine (1') having a shaft (1") attachable to an eccentric mass (1‴).

6. Cleaning method according to any of claims 1 and 5 wherein the main body (2) houses a control unit configured to regulate the speed of the variable speed electrical engine (1').

7. Cleaning method according to claim 6 wherein the main body (2) comprises at least one vibration isolator element configured to reduce the transmission of vibration to the control unit.

8. Cleaning method according to any of claims 1 and 5 to 7 comprising a support element (4) located in the connection between the main body (2) and the vibration transmitter element (3), wherein the support element (4) has a contact surface having a larger area than that of the engine injector hole (B).

## Patentansprüche

1. Reinigungsverfahren für Düsentriebwerke mit den folgenden Schritten:
- A) Identifizieren der Eigenfrequenz einer Brennkammerauskleidung des zu reinigenden Düsentriebwerks,
- C) Reproduzieren der Eigenfrequenz der Brennkammer mittels der Reinigungsvorrichtung, und **dadurch gekennzeichnet, dass** das Verfahren ferner den folgenden Schritt aufweist:
- B) Anordnen einer Reinigungsvorrichtung, welche eine Vibrationserzeugungseinheit (1) aufweist, die an einem Hauptkörper (2) befestigt ist, wobei der Hauptkörper (2) betriebsmäßig mit einem ersten Ende (3') eines Vibrationsübertragungselements (3) mit langgestreckter Konfiguration verbindbar ist, wobei das Vibrationsübertragungselement (3) ebenfalls ein dem ersten Ende (3') entgegengesetztes zweites Ende (3") aufweist, wobei das zweite Ende (3") dazu ausgebildet ist, an einer Innenseite der Brennkammer (A) des Düsentriebwerks anzuliegen, und wobei das Vibrationsübertragungselement (3) dazu geeignet ist durch ein Triebwerkeinspritzloch (B) und ein Brennkammereinspritzloch (A') des Düsentriebwerks eingeführt zu werden, wobei der Schritt B) das Anordnen der Reinigungsvorrichtung mit dem zweiten Ende (3") des Vibrationsübertragungselements (3) in Kontakt mit der Innenseite der Brennkammer (A) aufweist.

2. Reinigungsverfahren nach dem vorhergehenden Anspruch, bei welchem Schritt A) das Identifizieren der Eigenfrequenz einer Brennkammerauskleidung des vom Sand zu reinigenden Düsentriebwerks aufweist.

3. Reinigungsverfahren nach dem vorhergehenden Anspruch, ferner mit der Verwendung einer mit einem Brennkammereinspritzloch (A') verbundenen Vakuumvorrichtung während des Schritts C), um den gelösten Sand zu sammeln.

4. Reinigungsverfahren nach einem der Ansprüche 2 und 3, ferner mit der Verwendung einer mit einem Brennkammereinspritzloch (A') verbundenen Vakuumvorrichtung während des Schritts ), um mittels eines Trockenlaufs einen Triebwerksluftstrom zum Abführen des gereinigten Sands zum Auslass zu erzeugen.

5. Reinigungserfahren nach Anspruch 1, bei welchem die Vibrationserzeugungseinheit (1) einen Elektromotor (1') mit variabler Drehzahl mit einer Welle (1") aufweist, welche an einer Exzentermasse (1‴) anbringbar ist.

6. Reinigungsverfahren nach einem der Ansprüche 1 bis 5, bei welchem der Hauptkörper (2) eine Steuereinheit aufnimmt, die dazu ausgebildet ist, die Drehzahl des Elektromotors (1') mit variabler Drehzahl zu regeln.

7. Reinigungsverfahren nach Anspruch 6, bei welchem der Hauptkörper (2) mindestens ein Vibrationsdämpferelement aufweist, das dazu ausgebildet ist, die Übertragung von Vibrationen auf die Steuereinheit zu verringern.

8. Reinigungsverfahren nach einem der Ansprüche 1 und 5 bis 7, mit einem Stützelement (4), das in der Verbindung zwischen dem Hauptkörper (2) und dem Vibrationsübertragungselement (3) angeordnet ist, wobei das Stützelement (4) eine konische Oberfläche aufweist, welche eine größere Fläche als das Triebwerkeinspritzloch (B) aufweist.

## Revendications

1. Procédé de nettoyage de moteur à réaction, comprenant les étapes suivantes :
A) la détermination de la fréquence naturelle du revêtement de chambre de combustion du moteur à réaction à nettoyer,
C) la reproduction de la fréquence naturelle de la chambre de combustion par le dispositif de nettoyage, et
**caractérisé en ce que** le procédé comprend en outre l'étape suivante
B) la disposition d'un dispositif de nettoyage qui comprend un générateur de vibrations (1) fixé à un corps principal (2), dans lequel le corps principal (2) est connectable de façon opérationnelle avec une première extrémité (3') d'un élément transmetteur de vibrations (3) ayant une configuration allongée, l'élément transmetteur de vibrations (3) ayant également une deuxième extrémité (3"), opposée à la première extrémité (3'), la deuxième extrémité (3") étant configurée pour entrer en contact avec un côté intérieur de la chambre de combustion (A) du moteur à réaction, et l'élément transmetteur de vibrations (3) pouvant être introduit à travers un trou d'injecteur de moteur (B) et un trou d'injecteur de chambre de combustion (A') du moteur à réaction, dans lequel l'étape B) comprend l'élimination dudit dispositif de nettoyage avec la deuxième extrémité (3") de l'élément transmetteur de vibrations (3) en contact avec le côté intérieur de la chambre de combustion (A).

2. Procédé de nettoyage selon la revendication précédente, dans laquelle l'étape A) comprend l'identification de la fréquence naturelle d'un revêtement de chambre de combustion du moteur à réaction à nettoyer du sable.

3. Procédé de nettoyage selon la revendication précédente, comprenant en outre l'utilisation d'un dispositif à vide relié à un trou d'injecteur de la chambre de combustion (A'), pendant l'étape C), afin de recueillir le sable détaché.

4. Procédé de nettoyage selon l'une quelconque des revendications 2 et 3, comprenant en outre l'utilisation d'un dispositif de vide connecté à un trou d'injecteur de la chambre de combustion (A'), au cours de l'étape C), afin de produire un flux d'air du moteur par une manivelle sèche pour détacher le sable nettoyé à l'échappement.

5. Procédé de nettoyage selon la revendication 1, dans lequel le générateur de vibrations (1) comprend un moteur électrique à vitesse variable (1') ayant un arbre (1") pouvant être fixé à une masse excentrique (1‴).

6. Procédé de nettoyage selon l'une quelconque des revendications 1 et 5, dans lequel le corps principal (2) abrite une unité de commande configurée pour réguler la vitesse du moteur électrique à vitesse variable (1').

7. Procédé de nettoyage selon la revendication 6, dans lequel le corps principal (2) comprend au moins un élément d'isolation des vibrations configuré pour réduire la transmission des vibrations à l'unité de commande.

8. Procédé de nettoyage selon l'une quelconque des revendications 1 et 5 à 7 comprenant un élément de support (4) situé dans la connexion entre le corps principal (2) et l'élément transmetteur de vibrations (3), dans lequel l'élément de support (4) a une surface de contact ayant une surface plus grande que celle du trou d'injection du moteur (B).
